# EUROPÄISCHE PATENTSCHRIFT

(11) **EP 1 493 322 B1**
(45) Veröffentlichungstag und Bekanntmachung des Hinweises auf die Patenterteilung: **06.05.2015**
(21) Anmeldenummer: 04015478.3
(22) Anmeldetag: 01.07.2004
(51) Int. Cl.: A01D 78/10, A01D 80/00, A01B 73/06

(54) **Heuwerbungsmaschine**
Haymaking machine
Machine de fenaison

(30) Priorität: 04.07.2003 DE 10330382
(43) Veröffentlichungstag der Anmeldung: 05.01.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 0 310 532
- EP-A- 0 956 759
- DE-A- 19 625 732
- US-A- 5 113 956
- US-B1- 6 202 756

## Beschreibung

Die Erfindung betrifft eine Heuwerbungsmaschine, insbesondere zum Zetten und Wenden von Halmgut, mit an Maschinenbalken angeordneten und über Stützräder auf dem Boden abstützbaren Arbeitskreiseln sowie Maschinenbalken in Arbeitsfahrtrichtung vorgeordneten Rahmenteilen, wobei seitlich neben einem zentralen Maschinenbalken vorgesehene seitliche Maschinenbalken mit ihren zugeordneten Rahmenteilen aus einer sich beispielsweise quer zur Arbeitsfahrtrichtung erstreckenden Arbeitsstellung in eine in etwa parallel zur Arbeitsfahrtrichtung um im wesentlichen vertikale Schwenkachsen verschwenkte Transportstellung überführbar sind.

Eine derartige Heuwerbungsmaschine ist aus der DE 296 10 307 U1 bekannt. Bei dieser Heuwerbungsmaschine mit großer Arbeitsbreite sind den beiden seitlichen Maschinenbalken Rahmenteile zum Schutz der Arbeitskreisel vorgeordnet, die über Stützen an den Maschinenbalken abgestützt sind. Um in der Arbeitsstellung der Teile die seitlichen Maschinenbalken zu stabilisieren, sind neben den normalen Verbindungsteilen zum landwirtschaftlichen Schlepper hin besondere Zugstreben mit den seitlichen Maschinenbalken verbunden, die bis in den Bereich eines zweiten Arbeitskreisels reichen. Damit sollen die seitlichen Maschinenbalken in Arbeitsfahrtrichtung stabilisiert werden. Der mit der zusätzlichen Verbindungseinrichtung einhergehende bauliche Aufwand ist nicht unerheblich. In der Praxis jedoch kann eine Verbindungsvorrichtung bei großen Arbeitsbreiten der Maschine die seitlichen Maschinenbalken in ihrer Arbeitsstellung nicht hinreichend stabilisieren.

Der Erfindung liegt die Aufgabe zugrunde, eine Heuwerbungsmaschine für große Arbeitsbreiten mit verbesserten Stabilitätseigenschaften zu schaffen.

Zur Lösung dieser Aufgabe zeichnet sich die Heuwerbungsmaschine der eingangs genannten Art dadurch aus, daß die Rahmenteile der in Arbeitsstellung überführten seitlichen Maschinenbalken zusammen mit einem Rahmenteil des zentralen Maschinenbalkens oder einem Rahmenteilbereich der seitlichen Rahmenteile als durchgehendes Zugstangenelement mit zumindest einer die Rahmenteile lösbar verbindenden Verbindungsvorrichtung ausgebildet sind, wobei die Verbindungsvorrichtung zusätzlich zur Verbindungsfunktion die Funktion eines Gelenks aufweist.

Durch die Ausbildung der Rahmenteile vor den Arbeitskreiseln als eine durchgehende Zugstange wird die Stabilität der Maschine in der Arbeitsstellung der Teile, insbesondere bei großen Arbeitsbreiten, erheblich verbessert. Vor allem in oder entgegen der Arbeitsfahrtrichtung auf die seitlichen Maschinenbalken wirkende Kräfte können deutlich besser kompensiert werden. Das Zugstangenelement weist zumindest eine Verbindungsvorrichtung auf, durch die zwei Rahmenteile des Zugstangenelements lösbar miteinander verbunden sind. Zum Überführen der seitlichen Maschinenbalken und der diesen zugeordneten Rahmenteilen aus der Arbeitsstellung in die in etwa parallel zur Arbeitsfahrtrichtung verschwenkte Transportstellung werden die entsprechenden Rahmenteile über die Verbindungsvorrichtung voneinander getrennt. Die Verbindungsvorrichtung befindet sich hierzu zweckmäßigerweise an einer zentralen Stelle des Zugstangenelements. Durch die doppelte Funktion der Rahmenteile, zum einen als Schutz der Kreisel, zum anderen als Teil der Zugstange, können trotz der deutlich verbesserten Stabilität der Maschine Bauteile eingespart werden.

In einer bevorzugten Ausgestaltung der Erfindung sind beidseits des dem zentralen Maschinenbalken zugeordneten Rahmenteils Verbindungsvorrichtungen angeordnet, die dieses Rahmenteil in der Arbeitsstellung mit den Rahmenteilen der seitlichen Maschinenbalken lösbar verbinden. Zum Verschwenken der seitlichen Maschinenbalken in die Transportstellung werden die Verbindungen der seitlichen Rahmenteile zum zentralen Rahmenteil über die beiden Verbindungsvorrichtungen vorzugsweise automatisch gelöst.

Besonders vorteilhaft ist die Verbindungsvorrichtung dergestalt ausgebildet, daß an einem ersten Endbereich des zu verbindenden Zugstangenelementes ein Gelenkbolzen angeordnet ist und an dem weiteren dem ersten Endbereich in der Arbeitsstellung gegenüberliegenden Endbereich ein Halteelement und diesem gegenüberliegend ein Arretierelement angeordnet sind. In der Arbeitsstellung der Teile greift der Gelenkbolzen in das Halteelement und das Arretierelement die Endbereiche verbindend ein.

Mit Vorteil sind hierbei die beiden sich gegenüberliegenden Endbereiche des Zugstangenelementes in der Arbeitsstellung um eine im wesentlichen horizontale und durch den Gelenkbolzen verlaufende Schwenkachse gegeneinander verschwenkbar. Diese Anordnung ermöglicht eine vertikale Anpassung der Zugstange in diesem Bereich an von den Stützrädern auf den Maschinenbalken und die Rahmenteile weitergegebene Unebenheiten des Bodens.

Die Heuwerbungsmaschine weist bevorzugt eine erhöhte Anzahl von Arbeitskreiseln mit jeweils geringerem Kreiseldurchmesser auf. Hierdurch sind pro Kreisel geringere Mengen von Halmgut zu verarbeiten, wodurch sich die Qualität insbesondere auch von zu Futtermittel zu verarbeitendem Halmgut verbessern lässt. Durch den geringen Kreiseldurchmesser ist darüber hinaus der Streuwinkel positiv beeinflusst und die Menge nicht aufgenommenen Halmguts deutlich verringert. Solche kleineren Arbeitskreiseldurchmesser lassen sich besonders gut realisieren, wenn die Lage der vertikalen Schwenkachsen der beiden seitlichen Maschinenbalken so gewählt ist, daß das Abstandsmaß A zwischen den inneren Arbeitskreiseln in der Arbeitsstellung sich bei der Überführung der seitlichen Maschinenbalken in die Transportstellung vergrößert.

Weitere Vorteile und Einzelheiten der Erfindung ergeben sich aus den Unteransprüchen und den in den Zeichnungen schematisch dargestellten Ausführungsbeispielen; es zeigen:
- Fig. 1: eine erfindungsgemäße Heuwerbungsmaschine in der Draufsicht in der Arbeitsstellung ihrer Teile,
- Fig. 2: eine Heuwerbungsmaschine nach Fig. 1 in der Transportstellung ihrer Teile,
- Fig. 3: eine Ausschnittsvergrößerung einer erfindungsgemäßen Verbindungsvorrichtung im verbindenden Zustand in dreidimensionaler Darstellung,
- Fig. 4: eine Verbindungsvorrichtung nach Fig. 3 im gerade gelösten Zustand der Endbereiche des Zugstangenelementes,
- Fig. 5: eine Verbindungsvorrichtung nach Fig. 3 im nicht verbindenden Zustand,
- Fig. 6: eine Ausschnittsvergrößerung einer Gelenkstelle in der Arbeitsstellung der Teile in dreidimensionaler Darstellung und
- Fig. 7: ein Schaltbild der Steuerungsvorrichtung für die automatischen Funktionsabläufe der Maschinenbedienung.

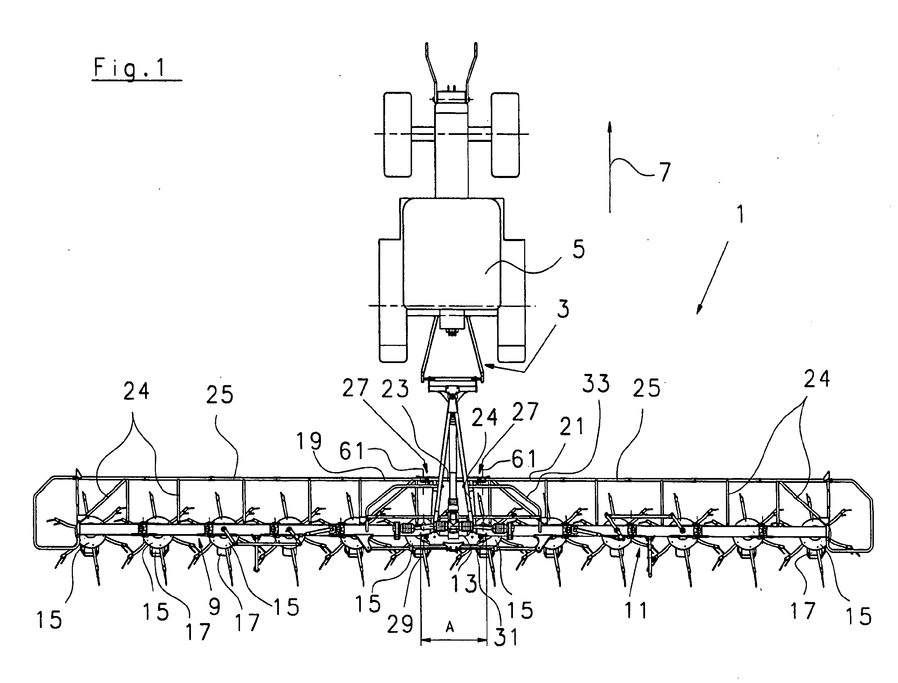

In Fig. 1 ist eine erfindungsgemäße Heuwerbungsmaschine 1 dargestellt, die an die üblichen Koppelelemente 3 eines Schleppers 5 angeordnet ist und von dem Schlepper 5 in eine Arbeitsfahrtrichtung 7 gezogen wird. An seitlichen Maschinenbalken 9 und 11 sind Arbeitskreisel 15 angeordnet, die über Stützräder 17 auf dem Boden abstützbar sind.

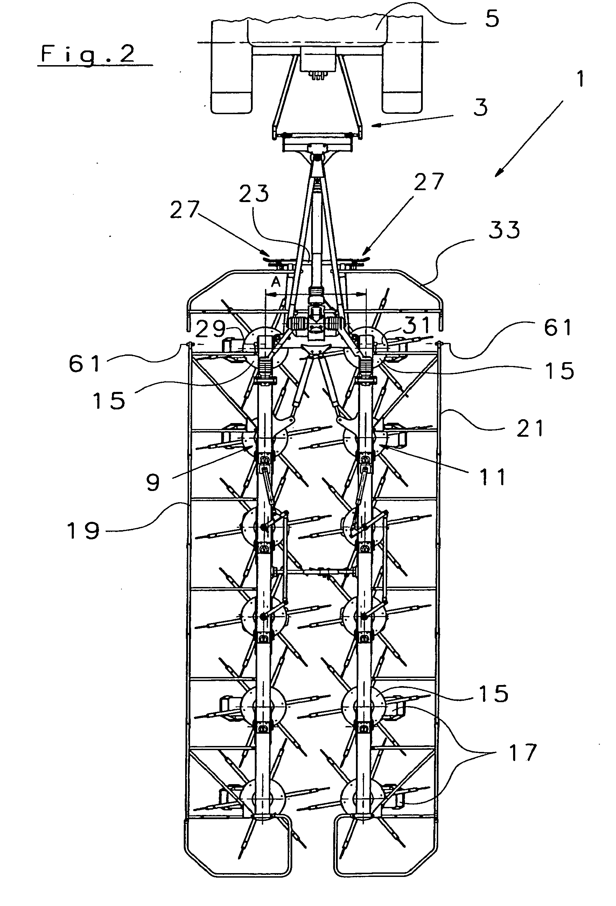

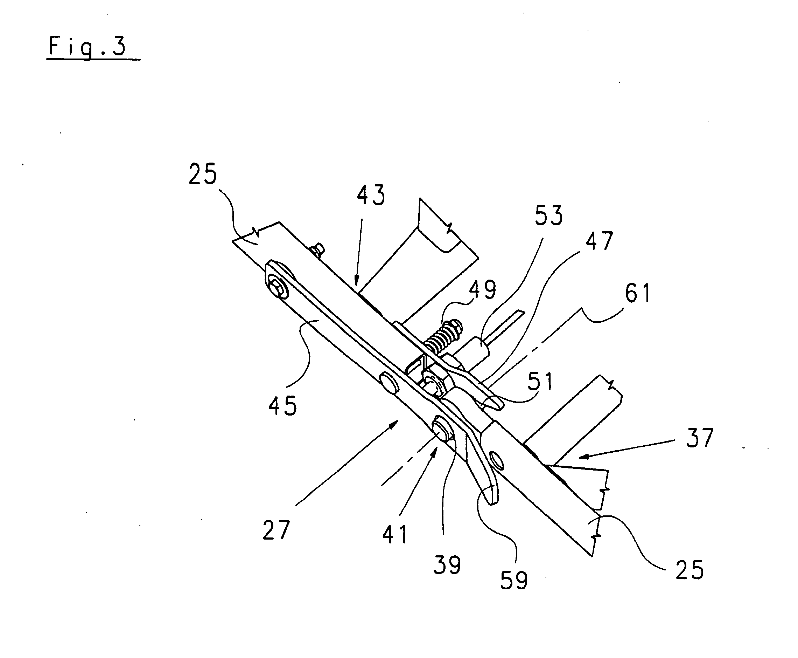

Zum Schutz der Arbeitskreisel 15 und als Schutzvorrichtung vor den Arbeitskreiseln 15 sind den seitlichen Maschinenbalken 9 und 11 und dem zentralen Maschinenbalken 13 vorgeordnete Rahmenteile 19, 21 und 23 zugeordnet. Diese sind mit Hilfe von Stabilisierungselementen 24 an den Maschinenbalken 9, 11 und 13 abgestützt. Die Stabilisierungsstützen 24 können dabei sowohl rechtwinklig als auch diagonal zu den Maschinenbalken 9, 11 und 13 angeordnet sein. Die seitlichen Rahmenteile 19, 21 und das zentrale Rahmenteil 23 sind in der in Fig. 1 dargestellten Arbeitsstellung über Verbindungsvorrichtungen 27 miteinander verbunden und bilden durch diese Anordnung ein durchgehendes vor den Maschinenbalken 9, 11 und 13 angeordnetes Zugstangenelement 25 aus. Die seitlichen Maschinenbalken 9 und 11 sind um vertikale Schwenkachsen 29 und 31 nach Lösen der durch die Verbindungsvorrichtung 27 hergestellten Verbindungen der Rahmenteile 19, 21 und 23 voneinander aus der im wesentlichen quer zur Arbeitsfahrtrichtung 7 angeordneten Arbditsstellune(Fig. 1) in eine in etwa parallel zur Arbeitsfahrtrichtung 7 verschwenkte Transportstellung überführbar, wie in Fig. 2 dargestellt. Hierbei werden die seitlichen Rahmenteile 19 und 21 mitverschwenkt und gewährleisten somit auch in der Transportstellung der Teile einen Schutz der Arbeitskreisel 15 bzw. einen Schutz vor den Arbeitskreiseln 15. Ein weiteres zentrales Rahmenteil 33 bietet den und vor den in Fahrtrichtung 7 in der Transportstellung beiden vorderen Arbeitskreiseln 15 einen zusätzlichen Schutz. Das Abstandsmaß A zwischen den Vertikalmittelachsen der beiden in Arbeitsstellung inneren Arbeitskreisel 15 (Fig.1) ist in der Transportstellung (Fig. 3) vergrößert. Bevorzugtermassen ist hier ein Abstandsmaß A in der Transportstellung vorgesehen, welches 110 bis 130 % des Abstandsmaßes A in der Arbeitsstellung beträgt. Damit lässt sich der Freiraum unterhalb der Arbeitskreisel 15 für ein Stützrad 17 optimal nutzen. Zudem sind die Fahreigenschaften optimiert.

Fig. 3 bis 5 zeigen die Verbindungsvorrichtung 27 in verschiedenen Stadien der Verbindung. Im verbundenen Zustand (Fig. 3) greift ein an einem ersten Endbereich 37 angeordneter Gelenkbolzen 39 in eine Ausnehmung 41 eines an einem weiteren Endbereich 43 des Zugstangenelementes 25 angeordneten Arretierelements 45 ein. Mit Hilfe eines ebenfalls an dem weiteren Endbereich 43 angeordneten Halteelements 47 wird ein Herausgleiten des Gelenkbolzens 39 aus der Ausnehmung 41 verhindert.

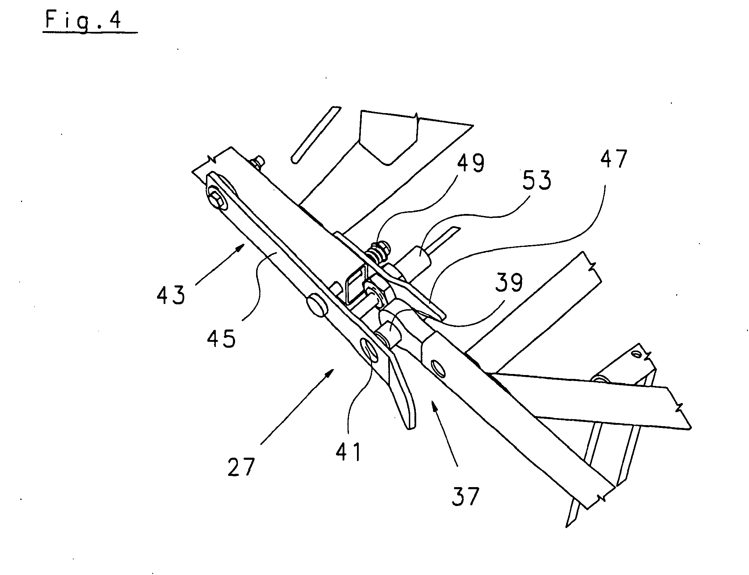

Das Arretierelement 45 wird mit Hilfe eines Kraftelements z.b. einer Feder 49 in Richtung des Halteelements 47 gedrückt und wird mit einem minimalen Abstand zum Halteelement 47, der von der Dicke des weiteren Endbereichs 43 vorgegeben ist, gehalten. Das Halteelement 47 ist dabei fest mit dem weiteren Endbereich 43 verbunden. Der Gelenkbolzen 39 greift in einen Aufnahmeraum 51 des Halteelements 47 ein. Es ist jedoch durchaus möglich, das Arretierelement 45 mit dem weiteren Endbereich 43 fest zu verbinden und das Halteelement 47 gegenüber diesem beabstandbar auszubilden. Um z.b. in diesem Fall ein leichteres Einrasten des Gelenkbolzens 39 in die Ausnehmung 41 zu ermöglichen, kann der Gelenkbolzen relativ zum ersten Endbereich 37 beweglich angeordnet sein. Zum Lösen der Verbindung der beiden Endbereiche 37 und 43 voneinander (Fig. 4) ist das Arretierelement 45 entgegen der Kraft der Feder 49 mit Hilfe eines Hydraulikzylinders 53 von dem Halteelement 47 entfernbar, d.h. der Abstand zwischen dem Halteelement 47 und dem Arretierelement 45 ist mit Hilfe des Hydraulikzylinders 53 vergrößerbar. Es ist jedoch ebenso vorsehbar, die Feder 49 so zu positionieren, daß diese das Arretierelement 45 von dem Halteelement 47 wegdrückt oder -zieht und der Hydraulikzylinder 53, der Federkraft wiederum entgegenwirkend, das Arretierelement 45 in Richtung des Halteelements 47 zieht. Diese Ausgestaltung ist in den Zeichnungen nicht dargestellt. Anstelle eines einseitig wirkenden Hydraulikzylinders 53 und einer diesem entgegenwirkenden Feder 49 kann auch ein doppelseitig wirkender Hydraulikzylinder, der in den Zeichnungen nicht dargestellt ist, verwendet werden.

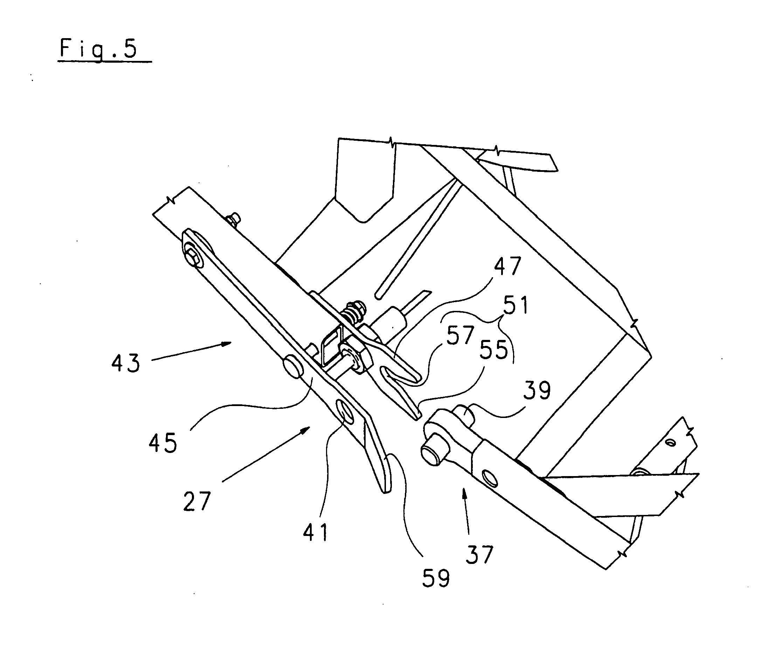

In Fig. 5 ist die Ausgestaltung des Aufnahmeraums 51 des Halteelementes 47 deutlicher zu sehen. Der Gelenkbolzen 39 wird während des Verbindens von einer maulartig erweiterten Öffnung 55 des Aufnahmeraums 51 eingefangen und in einen Lagerbereich 57 geführt. Der Durchmesser des Lagerbereichs 57 ist etwas größer als der Durchmesser des Gelenkbolzens 39 ausgebildet und liegt der Ausnehmung 41 des Arretierelements 45 vorzugsweise unmittelbar gegenüber. Ebenfalls zum besseren Einfangen des Gelenkbolzens 39 weist das Arretierelement 45 dem Gelenkbolzen 39 zugewandt eine abgewinkelte Führung 59 auf.

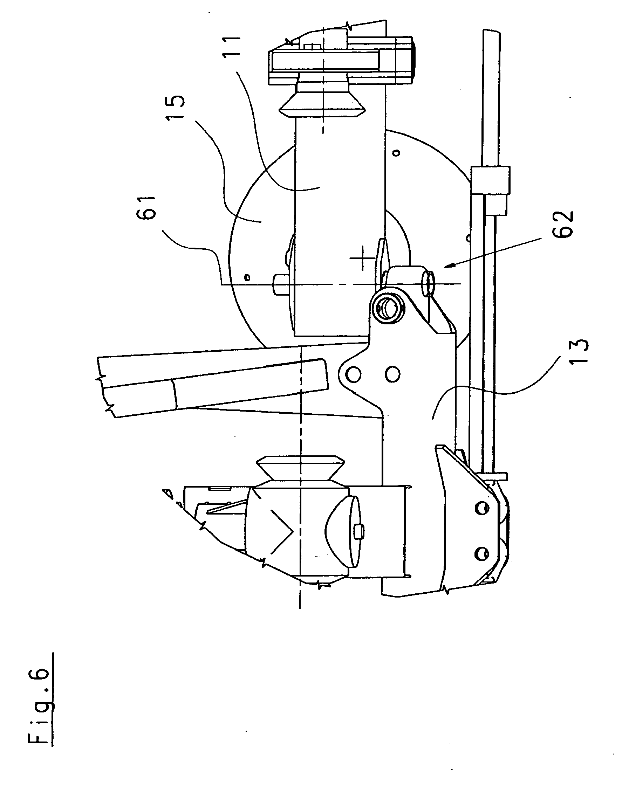

Die beiden Endbereiche 37 und 43 sind um eine im wesentlichen horizontale und durch den Gelenkbolzen 39 gehende Schwenkachse 61 (Fig. 3 und Fig. 1) gegeneinander verschwenkbar. Die Verbindungsvorrichtung 27 hat also zusätzlich zur Verbindungsfunktion die Funktion eines Gelenks. Den horizontalen Schwenkachsen 61 sind in der Arbeitsstellung koaxial weitere Schwenkachsen der Gelenkstellen 62 (Fig. 6) der Maschinenbalken (9, 11, 13) zugeordnet. Hierdurch ist eine gute Anpassung der Maschinenbalken (9, 11) an Unebenheiten des Bodens sichergestellt und Verspannungen innerhalb der Heuwerbungsmaschine 1 werden verhindert.

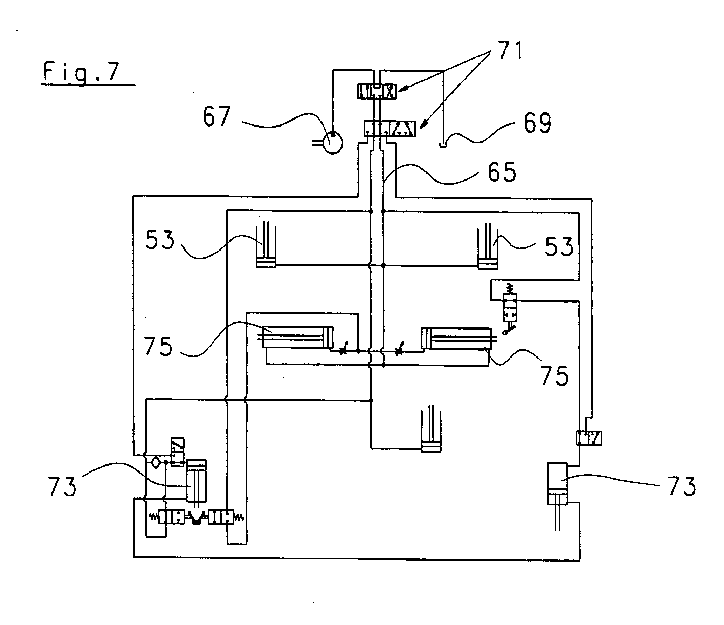

Die Entriegelung der Verbindungsvorrichtung 27 mit Hilfe des Hydraulikzylinders 53 erfolgt vorzugsweise durch eine, von einer bedienfreundlichen Position z.b. der Fahrerkabine aus ausgelösten Folgesteuerung. Fig. 7 zeigt ein Schaltbild der Steuerungsvorrichtung für den automatischen Funktionsablauf der Maschinenbedienung incl. dem Entriegeln der Verbindungsvorrichtung 27. Zur Überführung der Teile von der Arbeits- in die Transportstellung wird die Leitung 65 über die Pumpe 67 mit zugehörigem Tank 69 und entsprechender Ansteuerung der Ventilanordnung 71 mit Druck beaufschlagt. Hierdurch wird der Hydraulikzylinder 53 der Verbindungsvorrichtungen 27 betätigt, der dann das Arretierelement 45 ( Fig. 3-5) entgegen der Federkraft der Feder 49 von dem Halteelement 47 wegdrückt und den Gelenkbolzen 39 freigibt. Die Druckbeaufschlagung des Hydraukikzylinders 53 ist der Beginn einer sich automatisch fortsetzenden Abfolge weiterer Druckbeaufschlagungen von Stellgliedern. So werden unter anderem die als Lenkräder ausgebildeten Stützräder 17 über Lenkzylinder 73 gesteuert und die Bewegung der seitlichen Maschinenbalken 9 und 11 in die Transportstellung durch Schwenkzylinder 75 bewirkt. Beim Verschwenken der seitlichen Maschinenbalken 9 und 11 von der Transportstellung in die Arbeitsstellung wird der Hydraulikzylinder 53 nicht mit Druck beaufschlagt und der Gelenkbolzen 39 rastet in die Ausnehmung 41 des gefederten Arretierelements 45 ein. Die Feder 49 kraftbeaufschlagt anschließend das Arretierelement 45 in Richtung des Halteelements 47 und sichert den Gelenkbolzen 39 gegen ein Herausrutschen aus der Ausnehmung 41.

## Patentansprüche

1. Heuwerbungsmaschine (1), insbesondere zum Zetten und Wenden von Halmgut, mit an Maschinenbalken (9, 11) angeordneten und über Stützräder (17) auf dem Boden abstützbaren Arbeitskreiseln (15) sowie Maschinenbalken (9, 11) in Arbeitsfahrtrichtung (7) vorgeordneten Rahmenteilen (19, 21), wobei seitlich neben einem zentralen Maschinenbalken (13) vorgesehene seitliche Maschinenbalken (9,11) mit ihren zugeordneten Rahmenteilen (19, 21) aus einer sich quer zur Arbeitsfahrtrichtung (7) erstreckenden Arbeitsstellung in eine in etwa parallel zur Arbeitsfahrtrichtung (7) um im wesentlichen vertikale Schwenkachsen (29, 31) verschwenkte Transportstellung überführbar sind **dadurch gekennzeichnet, dass** die Rahmenteile (19, 21) der in Arbeitsstellung überführten seitlichen Maschinenbalken (9, 11) zusammen mit einem Rahmenteil (23) des zentralen Maschinenbalkens (13) oder einem Rahmenteilbereich derseitlichen Rahmenteile (19, 21) als durchgehendes Zugstangenelement (25) mit zumindest einer die Rahmenteile (19, 21, 23) lösbar verbindenden Verbindungsvorrichtung (27) ausgebildet sind, wobei die Verbindungsvorrichtung (27) zusätzlich zur Verbindungsfunktion die Funktion eines Gelenks mit einer horizontalen Schwenkachse (61) aufweist.

2. Heuwerbungsmaschine nach Anspruch 1, **dadurch gekennzeichnet, daß** das Rahmenteil (23) des zentralen Maschinenbalkens (13) in der Arbeitsstellung der Teile beidseits über Verbindungsvorrichtungen (27) mit den Rahmenteilen (19, 21) der seitlichen Maschinenbalken (9, 11) lösbar verbunden ist.

3. Heuwerbungsmaschine nach einem der vorhergehenden Ansprüche, **dadurch gekennzeichnet, daß** die Verbindungsvorrichtung (27) eine im wesentlichen horizontale Schwenkachse (61) aufweist, um die wenigstens ein Rahmenteil (19, 21, 23) verschwenkbar ist.

4. Heuwerbungsmaschine nach einem der vorhergehenden Ansprüche, **dadurch gekennzeichnet, daß** die Verbindungsvorrichtung (27) einen ersten (37) und einen diesem gegenüberstehenden weiteren Endbereich (43) des Zugstangenelementes (25) umfasst, an dem ersten Endbereich (37) ein Gelenkbolzen (39) angeordnet ist und an dem weiteren Endbereich (43) ein Halteelement (47) und diesem gegenüberliegend ein Arretierelement (45) angeordnet sind, in die der Gelenkbolzen (39) in der Arbeitsstellung die Endbereiche (37, 43) verbindend eingreift.

5. Heuwerbungsmaschine nach Anspruch 4, **dadurch gekennzeichnet, daß** das Arretierelement (45) durch ein Kraftelement, insbesondere eine Feder (49), in Richtung des Halteelements (47) kraftbeaufschlagt ist und durch ein Stellglied, insbesondere einen Hydraulikzylinder (53), von dem Halteelement (47) wegbewegbar ist.

6. Heuwerbungsmaschine nach einem der Ansprüche 4 oder 5, **dadurch gekennzeichnet, daß** das Arretierelement (45) eine Ausnehmung (41) aufweist, in die der Gelenkbolzen (39) einrastbar ist.

7. Heuwerbungsmaschine nach einem der Ansprüche 4 bis 6, **dadurch gekennzeichnet, daß** das Halteelement (47) einen Aufnahmeraum (51) mit einer dem Gelenkbolzen (39) zugewandten sich bis zu einem Lagerbereich (57) verjüngenden Öffnung (55) umfasst, wobei der Lagerbereich (57) etwas größer als der Durchmesser des Gelenkbolzens (39) ausgebildet ist.

8. Heuwerbungsmaschine nach einem der Ansprüche 4 bis 7, **dadurch gekennzeichnet, daß** der Durchmesser des ersten Endbereichs (37) des Zugstangenelementes (25) zumindest bereichsweise kleiner ist als der minimale Abstand zwischen dem Halteelement (47) und dem Arretierelement (45).

9. Heuwerbungsmaschine nach einem der Ansprüche 4 bis 8, **dadurch gekennzeichnet, daß** die im wesentlichen horizontale Schwenkachse (61) die Mittelachse des Gelenkbolzens (39) bildet.

10. Heuwerbungsmaschine nach einem der Ansprüche 3 bis 9, **dadurch gekennzeichnet, daß** den horizontalen Schwenkachsen (61) der Verbindungsvorrichtungen (27) in der Arbeitsstellung koaxial weitere Schwenkachsen der Gelenkstellen der Maschinenbalken (9, 11, 13) zugeordnet sind.

## Claims

1. Hay-making machine (1), in particular for tedding and turning stalk material, comprising working rotors (15) which are arranged on machine beams (9, 11) and can be supported on the ground by means of support wheels (17), and frame parts (19, 21) arranged in front of the machine beams (9, 11) in the working direction of travel (7), it being possible for lateral machine beams (9, 11) arranged to the side of a central machine beam (13) to be moved, together with the frame parts (19, 21) assigned thereto, from a working position which extends transversely to the working direction of travel (7), into a transport position which is pivoted about substantially vertical pivot axes (29, 31) such that it is almost parallel to the working direction of travel (7), **characterised in that** the frame parts (19, 21) of the lateral machine beams (9, 11) which have been moved into the working position and a frame part (23) of the central machine beam (13) or a frame part region of the lateral frame parts (19, 21) are designed as a continuous drawbar element (25) having at least one connecting device (27) which releasably connects the frame parts (19, 21, 23), the connecting device (27) serving as both a connection and a joint having a horizontal pivot axis (61).

2. Hay-making machine according to claim 1, **characterised in that**, when the parts are in the working position, the frame part (23) of the central machine beam (13) is releasably connected on either side to the frame parts (19, 21) of the lateral machine beams (9, 11) by means of connecting devices (27).

3. Hay-making machine according to any of the preceding claims, **characterised in that** the connecting device (27) comprises a substantially horizontal pivot axis (61), about which at least one frame part (19, 21, 23) can be pivoted.

4. Hay-making machine according to any of the preceding claims, **characterised in that** the connecting device (27) comprises a first (37) end region and an additional end region (43), which is opposite said first end region, of the drawbar element (25), a joint bolt (39) is arranged on the first end region (37) and a retaining element (47) and a locking element (45) which is opposite said retaining element are arranged on the additional end region (43), with which retaining element and locking element the joint bolt (39) engages, when in the working position, such as to connect the end regions (37, 43).

5. Hay-making machine according to claim 4, **characterised in that** force is applied, in the direction of the retaining element (47), to the locking element (45) by means of a force element, in particular a spring (49), and said locking element can be moved away from the retaining element (47) by means of an actuator, in particular a hydraulic cylinder (53).

6. Hay-making machine according to either claim 4 or claim 5, **characterised in that** the locking element (45) comprises a recess (41) in which the joint bolt (39) can engage.

7. Hay-making machine according to any of claims 4 to 6, **characterised in that** the retaining element (47) has a receiving space (51) comprising an opening (55) which faces the joint bolt (39) and tapers to form a bearing region (57), the bearing region (57) being slightly larger than the diameter of the joint bolt (39).

8. Hay-making machine according to any of claims 4 to 7, **characterised in that** the diameter of the first end region (37) of the drawbar element (25) is smaller, at least in certain regions, than the minimum distance between the retaining element (47) and the locking element (45).

9. Hay-making machine according to any of claims 4 to 8, **characterised in that** the substantially horizontal pivot axis (61) forms the central axis of the joint bolt (39).

10. Hay-making machine according to any of claims 3 to 9, **characterised in that**, in the working position, additional pivot axes of the moving joints of the machine beams (9, 11, 13) are coaxially assigned to the horizontal pivot axes (61) of the connecting devices (27).

## Revendications

1. Machine de fenaison (1) en particulier pour épandre et retourner des produits en tiges comportant des rotors de travail (15) montés sur des poutres (9, 11) de la machine et susceptibles de s'appuyer sur le sol par des roues d'appui (17), ainsi que des parties de châssis (19, 21) situées en avant des poutres de machine (9, 11) dans la direction de travail (7), des poutres de machine latérales (9, 11) montées latéralement à côté d'une poutre centrale (13) pouvant être déplacées avec les parties de châssis associées (19, 21) d'une position de travail s'étendant transversalement à la direction de déplacement de travail (7) dans une position de transport dans laquelle elles sont déplacées par pivotement essentiellement parallèlement à la direction de déplacement (7) autour d'un axe de pivotement (29, 31) essentiellement vertical,
**caractérisé en ce que**
les parties de châssis (19, 21) des poutres de machine latérales (9, 11) transférées en position de travail sont réalisées avec une partie de châssis (23) de la poutre de machine centrale (13) ou une zone de partie de châssis des parties de châssis latérales (19, 21) sous la forme d'un élément de barre de traction continu (25) comportant un dispositif de liaison (27) reliant de façon amovible au moins l'une des parties de châssis (19, 21, 23), le dispositif de liaison (27) remplissant en plus de la fonction de liaison la fonction d'une articulation avec un axe de pivotement horizontal (61).

2. Machine de fenaison conforme à la revendication 1,
**caractérisée en ce que**
la partie de châssis (23) de la poutre de machine centrale (13) est reliée de chaque côté, de façon amovible dans la position de travail des parties, par des dispositifs de liaison (27) avec les parties de châssis (19, 21) des poutres de machine latérales (9, 11).

3. Machine de fenaison conforme à l'une des revendications précédentes,
**caractérisée en ce que**
le dispositif de liaison (27) comporte un axé de pivotement (61) essentiellement horizontal autour duquel au moins une partie de châssis (19, 21, 23) peut pivoter.

4. Machine de fenaison conforme à l'une des revendications précédentes,
**caractérisée en ce que**
le dispositif de liaison (27) comporte une première zone d'extrémité (37) et une seconde zone d'extrémité (43) située en regard de celle-ci de l'élément de barre de traction (25); un tourillon d'articulation (39) étant monté sur la première zone d'extrémité (37), et un élément de retenue (47) ainsi qu'un élément de blocage (45) situé en regard de celui-ci sont montés sur l'autre zone d'extrémité (43), éléments dans lesquels le tourillon d'articulation (39) vient en prise pour réaliser une liaison des zones d'extrémité (37, 43) dans la position de travail.

5. Machine de fenaison conforme à la revendication 4,
**caractérisée en ce que**
l'élément de blocage (45) est rappelé par un élément élastique en particulier un ressort (49) en direction de l'élément de retenue (47) et peut être déplacé pour s'éloigner de l'élément de retenue (47) par un élément de réglage, en particulier un cylindre hydraulique (53).

6. Machine de fenaison conforme à l'une des revendications 4 et 5,
**caractérisée en ce que**
l'élément de blocage (45) comporte un évidement (41) dans lequel le goujon d'articulation (39) peut être encliqueté.

7. Machine de fenaison conforme à l'une des revendications 4 à 6,
**caractérisée en ce que**
l'élément de retenue (47) comporte un volume de réception (51) muni d'une ouverture (55) tournée vers le goujon d'articulation (39) et s'amincissant jusqu'à une partie de palier (57), cette partie de palier (57) étant un peu plus grande que le diamètre du goujon d'articulation (39).

8. Machine de fenaison conforme à l'une des revendications 4 à 7,
**caractérisée en ce que**
le diamètre de la première zone d'extrémité (37) de l'élément de barre de traction (25) est au moins par zone inférieur à la distance minimum entre l'élément de retenue (47) et l'élément de blocage (45).

9. Machine de fenaison conforme à l'une des revendications 4 à 8,
**caractérisée en ce que**
l'axe de pivotement (61) qui est essentiellement horizontal forme l'axe médian du goujon d'articulation (39).

10. Machine de fenaison conforme à l'une des revendications 3 à 9,
**caractérisée en ce qu'**
aux axes de pivotements horizontaux (61) des dispositifs de liaison (27) sont associés co-axialement dans la position de travail d'autres axes de pivotement des points d'articulation des poutres de machine (9, 11, 13).
